# EUROPEAN PATENT APPLICATION

(11) **EP 4 535 472 A1**
(43) Date of publication of application: **09.04.2025**
(21) Application number: 23816366.1
(22) Date of filing: 31.05.2023
(51) Int. Cl.: H01M 10/04, B65G 59/04, B65G 59/02

(54) **DEVICE AND METHOD FOR MANUFACTURING ELECTRODE ASSEMBLY**

(30) Priority: 03.06.2022 KR 20220068090
(71) Applicant: LG Energy Solution, Ltd., Seoul 07335 (KR)
(72) Inventor: CHO, Kwooman, Daejeon 34122 (KR)
(74) Representative: Goddar, Heinz J.
(86) International application number: PCT/KR2023/007466
(87) International publication number: WO 2023/234706

(57) **Abstract**

The present invention provides an apparatus of manufacturing an electrode assembly, including a unit cell supply unit 10 including: a magazine 100 having therein one or more unit cells 700 stacked in a first direction; and an anti-static unit 200 removing static electricity from at least one of the one or more unit cells 700 stacked in the magazine 100. Each unit cell 700 comprises one or more electrodes 710 and one or more separators 720 alternately stacked in the first direction. The anti-static unit 200 comprises a contact body 210 for discharging static electricity from the at lest one of the one or more unit cells 700 wherein the contact body 210 is made of a conductive material and in contact with an electrode tab 714 of each of the at least one of the one or more electrodes 710 of the each of the at least one of the one or more unit cells 700. The electrode tab 714 protrudes in one direction of a second direction intersecting the first direction, and the contact body 210 is disposed at one side of the electrode tab 714 in the second direction.

## Description

### [TECHNICAL FIELD]

This application claims the benefit of priority based on Korean Patent Application No. 10-2022-0068090, dated June 3, 2022, and entire content disclosed in the document of the patent application is included as a part of this specification.

The present invention relates to apparatus and method of manufacturing electrode assembly, and more particularly, to apparatus and method of manufacturing electrode assembly capable of individually extracting and supplying unit cells stacked in a magazine.

### [BACKGROUND ART]

Generally, a secondary battery refers to a battery that may be charged and discharged, unlike primary batteries that cannot be recharged. These secondary batteries are used in small, high-tech electronic devices such as mobile phones, PDAs and laptop computers as well as in energy storage systems (ESS), electric vehicles (EV) or hybrid electric vehicles (HEV) as a power source.

Secondary batteries are classified into can-type secondary batteries wherein the electrode assembly is embedded in a metal can, and pouch-type secondary batteries wherein the electrode assembly is embedded in a pouch (battery case). Pouch-type secondary batteries include an electrode assembly and a pouch (battery case) that accommodates the electrode assembly. The electrode assembly includes one or more unit cells, and each of the unit cells have a structure in which electrodes and separators are alternately stacked.

Meanwhile, the electrode assembly is manufactured using an apparatus of manufacturing electrode assembly, which includes a magazine in which the one or more unit cells are stacked, a transport unit that adheres the one or more unit cells stacked in the magazine, and then stacks the same at a predetermined location.

However, when the apparatus of manufacturing electrode assembly adheres the unit cells stacked at the top of the magazine, there is a problem in that two or more unit cells stacked at the top of the magazine are extract together due to static electricity.

### [PRIOR ART LITERATURE]

### [PATENT DOCUMENT]

(Patent document 0001) Korean Patent Application Publication 10-2021-0047209

### [CONTENT OF THE INVENTION]

### [TECHNICAL PROBLEM TO BE SOLVED]

In order to solve the above-described problems, it is an object of the present invention to provide apparatus and method of manufacturing electrode assembly capable of individually extracting and supplying unit cells stacked in a magazine.

It is an object of the present invention to provide an apparatus of manufacturing electrode assembly that has a simple structure and configuration and reduces manufacturing and maintenance costs.

It is an object of the present invention to provide an apparatus of manufacturing electrode assembly that does not cause damage or deformation of unit cells and produce foreign matter.

It is an object of the present invention to provide an apparatus of manufacturing electrode assembly that provides simple and easy operation.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

**In** order to solve the above-described problems, the present invention provides an apparatus of manufacturing electrode assembly including a unit cell supply unit 10 and a unit cell transport unit 50.

The unit cell supply unit 10 may include a magazine 100 and an anti-static unit 200.

One or more unit cells 700 may be stacked in the first direction in the magazine 100.

The anti-static unit 200 may be placed adjacent to the magazine 100.

The anti-static unit 200 may remove static electricity from at least one of the one or more unit cells 700 stacked in the magazine 100.

The unit cell transport unit 50 may extract from the magazine 100 and transport the one or more unit cells 700 stacked in the magazine 100.

Each of the one or more unit cells 700 may include one or more electrodes 710 and one or more separators 720.

The one or more electrodes 710 and one or more separators 720 may be alternately stacked in the first direction.

The one or more electrodes 710 and one or more separators 720 may be bonded to each other in the first direction.

The anti-static unit 200 may include a contact body 210 made of a conductive material.

The contact body 210 is in contact with the at least one of the one or more unit cells 700 to discharge static electricity from the at least one of the one or more unit cells 700 by being in contact with an electrode tab 714 of each of at least one of the one or more electrodes 710 of each of the at least one of the one or more unit cells.

The electrode tab 714 of each of the at least one of the one or more electrodes 710 of each of the at least one of the one or more unit cells 700 protrudes in one direction of a second direction intersecting the first direction.

The contact body 210 may be disposed at one side of the electrode tab 714 in the second direction.

In one embodiment, the at least one of the one or more unit cells 700 may comprise one unit cell 700 disposed at one end of the one or more unit cells 700 stacked in the magazine 100 in the first direction

The unit cell transport unit 50 may extract from the magazine 100 and transport the one unit cell 700 of the one or more unit cells 700 stacked in the magazine 100 in the first direction.

In one embodiment, each of the at least one of the one or more electrodes 710 of each of the at least one of the one or more unit cells 700 may include a body 712 and an electrode tab 714.

The body 712 may be bonded to the one or more separators 720 in the first direction.

The electrode tab 714 may protrude further than the body 712 and the one or more separators 720 bonded to the body 712 in one direction of the second direction.

The electrode tab 714 may be coupled to the body 712.

In one embodiment, the at least one of the one or more unit cells 700 may be a plurality of unit cells 700.

The contact body 210 may extend in the first direction to be in contact with the electrode tab 714 of each of the plurality of unit cells 700 wherein the electrode tab 714 protrudes further than the body 712 and the one or more separators 720 in one direction of the second direction

In one embodiment, the contact body 210 may be in contact with the electrode tab 714 of each of the at least one of the one or more electrodes 710 of each of the at least one of the one or more unit cells 700 in the second direction.

When projected perpendicularly to an arbitrary plane extending in the second direction and a third direction intersecting the first direction and the second direction, the body 712 of each of the at least one of the one or more electrodes 710 of each of the at least one of the one or more unit cells 700 may include an overlapping portion P overlapping with the electrode tab 714 coupled to the body 712 in the third direction.

A distance D in the second direction between the overlapping portion P of each of the at least one of the one or more electrodes 710 of each of the at least one of the one or more unit cells 700 and the contact body 210 may be shorter than a length L in the second direction of the electrode tab 714 of each of the at least one of the one or more electrodes 710 of each of the at least one of the one or more unit cells 700.

In one embodiment, the value obtained by subtracting the distance D from the length L may be greater than zero and equal to or less than 1/15 of the length L.

In one embodiment, the contact body 210 and the electrode tab 714 may be made of the same material.

In one embodiment, the contact body 210 may be grounded.

**In** one embodiment, the anti-static unit 200 may further include a blower type ionizer 220.

The blower type ionizer 220 may generate ions and blow ionized air containing generated ions toward the one or more unit cells 700 stacked in the magazine 100 to remove the static electricity from the at least one of the one or more unit cells 700.

**In** one embodiment, the unit cell transport unit 50 may extract from the magazine 100 and transports one unit cell 700 disposed at one end of the one or more unit cells 700 stacked in the magazine 100 in the first direction.

The blower type ionizer 220 may blow the ionized air toward at least the one unit cell 700 disposed at one end of the one or more unit cells 700 stacked in the magazine 100 in the first direction..

**In** one embodiment, the blower type ionizer 220 may include a first blower type ionizer 222, a second blower type ionizer 224 and a third blower type ionizer 226.

The first blower type ionizer 222 may be disposed at one side of the one or more unit cells 700 in a third direction intersecting the first and the second directions and blow the ionized air toward the one or more unit cells 700.

The second blower type ionizer 224 may be disposed at the other side of the one or more unit cells 700 in the third direction and blow the ionized air toward the one or more unit cells 700.

The third blower type ionizer 226 may be disposed at the other side of the one or more unit cells 700 in the second direction and blow the ionized air toward the one or more unit cells 700.

In order to solve the above-described problems, the present invention provides a method of manufacturing an electrode assembly including a unit cell supply step of individually extracting and supplying the one or more unit cells 700 stacked in the magazine 100.

In the unit cell supply step, the contact body 210 may be brought into contact with the electrode tab 714 of each of the at least one of the one or more electrodes 710 of each of the at least one of the one or more unit cells 700.

### [ADVANTAGEOUS EFFECTS]

According to embodiments of the present invention, the apparatus of manufacturing electrode assembly 1 may include a unit cell supply unit 10 including: a magazine 100 having therein one or more unit cells 700 stacked in a first direction; and an anti-static unit 200 arranged adjacent to the magazine 100 and removing static electricity from at least one of the one or more unit cells 700 stacked in the magazine 100. Each of the one or more unit cells 700 may include one or more electrodes 710 and one or more separators 720 alternately stacked and bonded to each other in the first direction. The anti-static unit 200 may include a contact body 210 made of a conductive material wherein the contact body 210 is in contact with the at least one of the one or more unit cells 700 to discharge static electricity from the at least one of the one or more unit cells 700 by being in contact with an electrode tab 714 of each of at least one of the one or more electrodes 710 of the each of the at least one of the one or more unit cells 700.

Accordingly, the contact body 210, which is a conductor, is in contact with and is electrically connected to the at least one of the one or more electrodes 710 (conductor) of each of the at least one of the one or more unit cells 700 such that the static electricity of the unit cell 700 may be effectively discharged.

Specifically, since the contact body 210, which is a conductor, is in contact with and is electrically connected to the electrode 710, the static electricity of the electrode 710 of the unit cell 700 may be effectively discharged. In addition, even when the separator 720 of the unit cell 700 is made of an insulating material unlike the electrode 710, the static electricity of the separator 720 may be effectively discharged through the electrode 710 bonded to the separator 720. Accordingly, even when the contact body 210 is in contact with the electrode 710 of the unit cell 700, the static electricity of the entire unit cell 700 may be effectively discharged.

Thus, since the static electricity of the unit cell 700 may be effectively reduced, it is possible to prevent two or more unit cells 700 stacked in the magazine 100 from being extracted together. That is, individual extraction and supply of the one or more unit cells 700 stacked in the magazine 100 is possible. Accordingly, manufacturing defects of the electrode assembly due to the simultaneous extraction and the transport of two or more unit cells 700 may be prevented, and the interruption of the manufacturing process of the electrode assembly caused by one or more unit cells 700 falling during the transport to block sensors such as cameras may be prevented.

In particular, when the unit cell 700 is a half cell in which the separator 720, the electrode 710 and the separator 720 are stacked, each half cell of a plurality of half cells stacked in the magazine 100 may be individually extracted and transported from the magazine 100 even after long-term storage due to the effective discharge of the static electricity of the plurality of half cells. Therefore, the manufacturing defects of the electrode assembly caused by stacking of two or more half cells on top of laminate in which a plurality of mono cells having a stacked structure of separator 720, electrode 710, separator 720 and electrode 710 are stacked due to the generation of static electricity during long-term storage causing the extraction and the transport of two or more half cells from the magazine 100 may be prevented. In addition, the interruption of the manufacturing process of the electrode assembly caused by one or more half cells falling during the extraction and the transport of two or more half cells to block sensors such as cameras due to the generation of static electricity during to long-term storage may be prevented.

According to embodiments of the present invention, a unit cell transport unit 50 extracting from the magazine 100 and transporting one unit cell 700 disposed at one end of the one or more unit cells 700 stacked in the magazine 100 in the first direction may be further included. The contact body 210 may be at least in contact with the at least one of the one or more electrodes 710 of the one unit cell 700 disposed at one end of the one or more unit cells 700 stacked in the first direction.

Accordingly, when the unit cell transport unit 50 extracts from the magazine 100 and transports the unit cell 700 disposed at one end (e.g., upper end) of the one or more unit cells 700 stacked in the first direction, at least the static electricity of the unit cell 700 at one end in the first direction is discharged by the contact body 210, thereby preventing the unit cell transport unit 50 from simultaneously extracting and transporting two or more unit cells 700 disposed at one end of the one or more unit cells 700 stacked in the first direction. Accordingly, each of the one or more unit cells 700 stacked in the magazine 100 may be reliably extracted and supplied individually.

According to embodiments of the present invention, The electrode 710 of the unit cell 700 may include: a body 712 bonded to the separator 720 in the first direction; and the electrode tab 714 coupled to the body 712 and protruding further outward than the body 712 and the separator 720 bonded to the body 712. The contact body 210 may be in contact with the electrode tab 714 of the electrode 710 of each of the at least one of the one or more unit cells 700 to discharge static electricity from the unit cell 700.

Accordingly, the contact body 210, which is a conductor, may be in contact with the electrode tab 714 protruding outward to be electrically connected to the electrode 710 simply and easily. Accordingly, since the structure of the contact body 210 may be simplified, manufacturing and maintenance costs of the contact body 210 and the apparatus of manufacturing electrode assembly may be reduced.

According to embodiments of the present invention, the contact body 210 is in contact with a plurality of unit cells 700 by being in contact with the electrode tab 714 of each of the at least one of the one or more electrodes 710 of each of the plurality of unit cells 700. The electrode tab 714 of each of the at least one of the one or more electrodes 710 of each of the plurality of unit cells 700 may protrude further than the body 712 coupled to the electrode tab 714 and the separator 720 bonded to the body 712 toward one direction of the second direction that intersects the first direction. The contact body 210 may extend in the first direction to be in contact with the electrode tab 714 of each of the plurality of unit cells 700, which protrudes further than in one direction of the second direction

Accordingly, the static electricity of the plurality of unit cells 700 stacked in the magazine 100 may be effectively discharged by the contact body 210 extending in the first direction. Thus, the manufacturing and maintenance costs of the contact body 210 and the apparatus of manufacturing electrode assembly may be reduced since the configuration of the electrode assembly may be simplified,.

According to embodiments of the present invention, the electrode tab 714 of each of the at least one of the one or more electrodes 710 of each of the at least one of the one or more unit cells 700 may protrude further than the body 712 coupled to the electrode tab 714 and the separator 720 bonded to the body 712 toward one direction of the second direction that intersects the first direction. The contact body 210 may be disposed at one side of the electrode tab 714 of each of the at least one of the one or more electrodes 710 of each of the at least one of the one or more unit cells 700 in the second direction, and be in contact with the electrode tab 714 of each of the at least one of the one or more electrodes 710 of each of the at least one of the one or more unit cells 700 in the second direction.

Accordingly, since the contact body 210 is in contact with the protruding end (one side end of the second direction) of the electrode tab 714, that is, with the free end of the electrode tab 714, the electrode tab 714 may not be significantly damaged or deformed due to the contact body 210 applying pressure to the electrode tab 714 in the second direction.

In addition, the contact body 210 may be easily brought into contact with the electrode tab 714 or separated from the electrode tab 714 as necessary while moving the contact body 210 relatively from the unit cell 700 and the magazine 100 in the second direction. Accordingly, the operation of the unit cell supply unit 10 of the apparatus of manufacturing electrode assembly 1 may be simplified and facilitated.

According to embodiments of the present invention, when projected perpendicularly to an arbitrary plane extending in the second direction and a third direction intersecting the first direction and the second direction, the body 712 of each of the at least one of the one or more electrodes 710 of each of the at least one of the one or more unit cells 700 may include an overlapping portion P overlapping with the electrode tab 714 coupled to the body 712 in the third direction. A distance D in the second direction between the overlapping portion P of each of the at least one of the one or more electrodes 710 of each of the at least one of the one or more unit cells 700 and the contact body 210 may be shorter than a length L in the second direction of the electrode tab 714 of each of the at least one of the one or more electrodes 710 of each of the at least one of the one or more unit cells 700.

Accordingly, the distance D between the contact body 210 and the body 712 with the electrode tab 714 therebetween may be shortened such that the contact body 210 may reliably be in contact with the electrode tab 714. Accordingly, since the static electricity may be reliably discharged from the unit cells 700 through the contact body 210, the unit cells 700 stacked in the magazine 100 may be reliably extracted and supplied individually.

According to embodiments of the present invention, the value obtained by subtracting the distance D from the length L may be greater than zero and equal to or less than 1/15 of the length L.

Accordingly, the electrode tab 714 may be prevented from having excessive pressure applied thereto by the contact body 210. Thus, the electrode tab 714 may not be damaged or deformed while the contact body 210 is reliably brought into contact with the electrode tab 714.

According to embodiments of the present invention, the contact body 210 and the electrode tab 714 may be made of the same material.

Accordingly, even when the contact body 210 comes in contact with the electrode tab 714, foreign matter may not stick to the electrode tab 714.

According to embodiments of the present invention, the contact body 210 may be grounded.

Accordingly, since the static electricity of the unit cell 700 may be reliably discharged through the grounded contact body 210, the unit cells 700 stacked in the magazine 100 may be reliably individually extracted and supplied.

According to embodiments of the present invention, the anti-static unit 200 may further include a blower type ionizer 220 for removing the static electricity from the at least one of the one or more unit cells 700 by generating ions and blowing ionized air containing generated ions toward the one or more unit cells 700 stacked in the magazine 100.

Accordingly, since the static electricity of the unit cell 700 may be reliably removed through the contact body 210 and the blower type ionizer 220, the unit cells 700 stacked in the magazine 100 may be reliably and individually extracted and supplied.

According to embodiments of the present invention, a unit cell transport unit 50 extracting from the magazine 100 and transporting the unit cell 700 disposed at one end of the one or more unit cells 700 stacked in the magazine 100 in the first direction may be further included. The blower type ionizer 220 may blow ionized air toward at least one unit cell 700 disposed at one end of the one or more unit cells 700 stacked in the magazine 100 in the first direction.

Accordingly, when the unit cell transport unit 50 extracts from the magazine 100 and transports the unit cell 700 disposed at one end (e.g., upper end) of the one or more unit cells 700 stacked in the first direction, the static electricity of at least one unit cell 700 disposed at one end of the one or more unit cells 700 stacked in the first direction is removed by the blower type ionizer 220 such that the unit cell transport unit 50 may be prevented from extracting and transporting two or more unit cells 700 disposed at one end of the one or more unit cells 700. Therefore, the unit cells 700 stacked in the magazine 100 may be reliably and individually extracted and supplied.

Each of the one or more electrodes 710 of each of the at least one of the one or more unit cells 700 may include a body 712 bonded to the one or more separator 720 in the first direction; and the electrode tab 714 coupled to the body 712, protruding from one end of the body 712 in the second direction toward one direction of the second direction and protruding further than the one or more separator 720 bonded to the body 712 in one direction of the second direction. The contact body 210 may be disposed at one side of the electrode tab 714 of the one or more electrodes 710 of the each of the at least one of the one or more unit cells 700 in the second direction, and be in contact with the electrode tab 714 of the one or more electrodes 710 of each of the at least one of the one or more unit cells 700. The blower type ionizer 220 may include: a first blower type ionizer 222 disposed at one side of the one or more unit cells 700 in a third direction intersecting the first and the second directions and blowing the ionized air toward the one or more unit cells 700; a second blower type ionizer 224 disposed at the other side of the one or more unit cells 700 in the third direction and blowing the ionized air toward the one or more unit cells 700; and a third blower type ionizer 226 disposed at the other side of the one or more unit cells 700 in the second direction and blowing the ionized air toward the one or more unit cells 700.

Accordingly, the first, the second and the third blower type ionizers 222, 224 and 226 partially surround the one or more unit cells 700 and blow a large amount of ionized air from various directions toward the unit cell 700, thereby removing the static electricity of the one or more unit cells 700 effectively and reliably.

In addition, since the blower type ionizer 220 is not disposed at one side of the unit cells 700 in the second direction, the damage or the deformation of the electrode tab 714 protruding from one end of the unit cell 700 in the second direction toward one direction of the second direction due to the blowing pressure of the ionized air may be prevented.

In addition, every electrode tab 714 of every unit cell 700 may protrude in one direction of the second direction, and the contact body 210 in contact with every electrode tabs 714 of every unit cell 700 may be disposed at one side of the unit cells 700 in the second direction. Thus, the static electricity of every unit cell 700 may be effectively discharged by the contact body 210 having a simple shape (e.g., a bar shape extending in the first direction) and configuration (e.g., only one). Accordingly, manufacturing and maintenance costs of the contact body 210 and the apparatus of manufacturing electrode assembly may be reduced.

In addition, since every electrode tab 714 of every unit cell 700 may protrude in one direction of the second direction, it is sufficient that the blower type ionizer 220 is not disposed at one side of the unit cells 700 in the second direction to prevent damage or deformation of the electrode tabs 714. That is, the first, the second and the third blower type ionizers 222, 224 and 226 may be disposed at the other side of the unit cells 700 in the second direction and one and the other sides of the unit cells 700 in the third direction except one side of the unit cells 700 in the second direction. Therefore, the number of directions in which ionized air may be blown toward the unit cell 700 may increase and the amount of blown ionized air may increase. Thus, static electricity of the unit cell 700 may be effectively and reliably removed.

According to embodiments of the present invention, the method of manufacturing the electrode assembly may include a unit cell supply step of individually extracting and supplying unit cells 700 stacked in the magazine 100. **In** the unit cell supply step, the contact body 210 may be brought into contact with the one or more unit cells 700 stacked in the magazine 100 by bringing the contact body 210 into contact with the at least one of the one or more electrodes 710 of each of the one or more unit cells 700.

Accordingly, since the contact body 210, which is a conductor, is electrically connected to the at least one of the one or more electrodes 710 (conductor) of each of the one or more unit cells 700 by being in contact with the one or more electrodes 710, the static electricity of the unit cell 700 may be effectively discharged. Therefore, it is possible to prevent two or more unit cells 700 stacked in the magazine 100 from being extracted and supplied simultaneously as the static electricity of the unit cell 700 is effectively reduced. That is, individual extraction and supply of the one or more unit cells 700 stacked in the magazine 100 is possible. Accordingly, manufacturing defects of the electrode assembly due to the extraction and the transport of two or more unit cells 700 may be prevented, and the interruption of the manufacturing process of the electrode assembly caused by one or more unit cells 700 falling during the transport to block sensors such as cameras may be prevented.

In addition to the advantageous effects described above, specific effects of the present invention will be described further while describing specific details of the present invention.

### [BRIEF DESCRIPTION OF DRAWINGS]

FIG. 1 is a side view schematically illustrating an apparatus of manufacturing electrode assembly and unit cells according to an embodiment of the present invention.
FIGS. 2 and 3 are perspective and plan views schematically illustrating a unit cell supply unit and unit cells of the apparatus of manufacturing electrode assembly of FIG. 1, respectively.
FIG. 4 is a side view specifically illustrating an embodiment of the unit cell of FIGS. 1 to 3.
FIGS. 5 and 6 are plan and perspective views schematically illustrating a unit cell supply unit and unit cells according to another embodiment of the present invention.

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Additionally, the expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

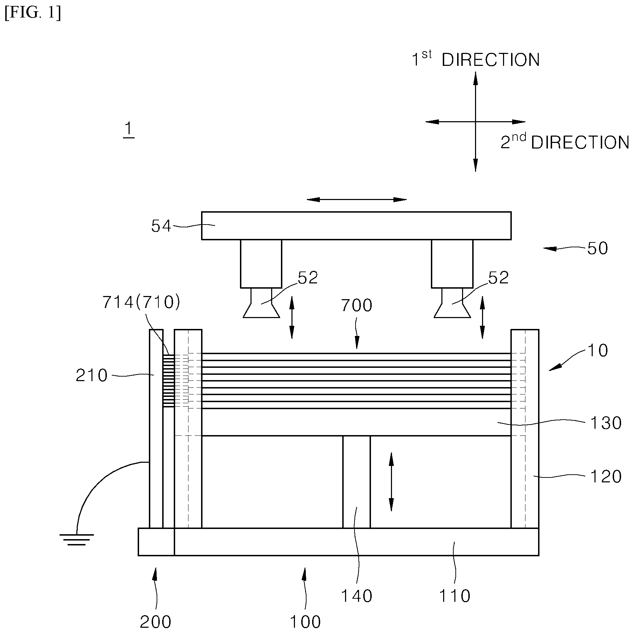

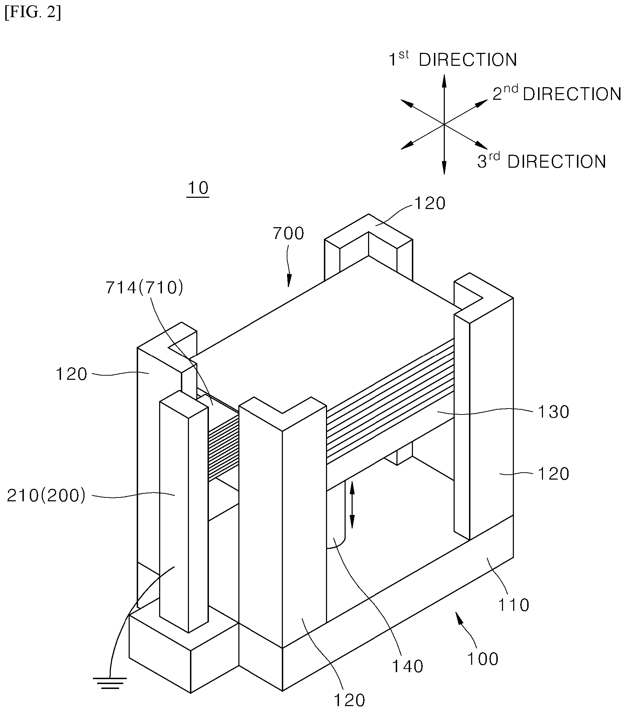

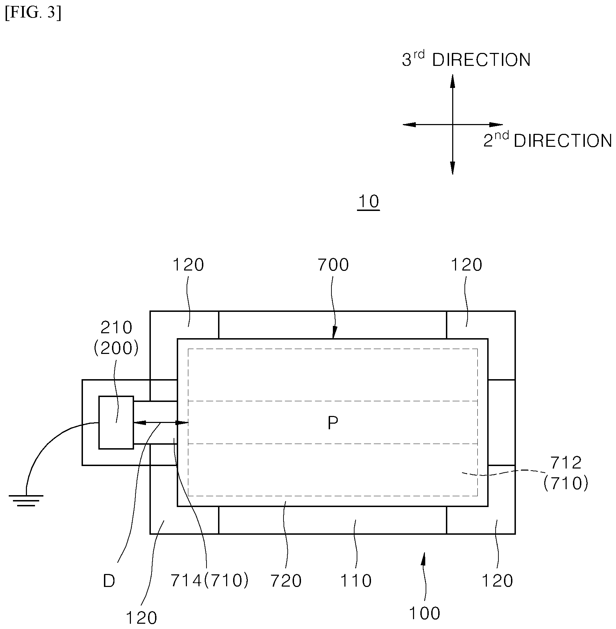

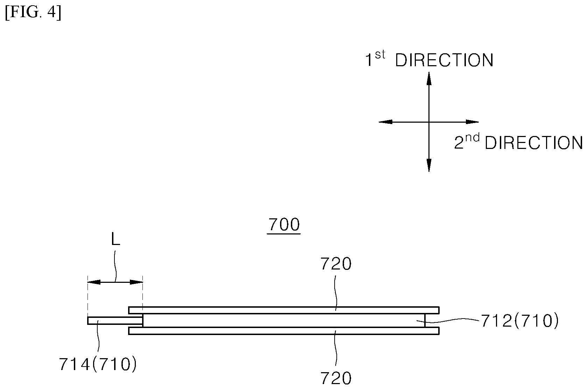

FIG. 1 is a side view schematically illustrating an apparatus of manufacturing electrode assembly and unit cells according to an embodiment of the present invention, FIGS. 2 and 3 are perspective and plan views schematically illustrating a unit cell supply unit and unit cells of the apparatus of manufacturing electrode assembly of FIG. 1, respectively, FIG. 4 is a side view specifically illustrating an embodiment of the unit cell of FIGS. 1 to 3, and FIGS. 5 and 6 are plan and perspective views schematically illustrating a unit cell supply unit and unit cells according to another embodiment of the present invention.

### [Unit Cell]

Referring to FIG. 4, a unit cell 700 may include one or more electrodes 710 and one or more separators 720. The one or more electrodes 710 and the one or more separators 720 may be alternately stacked in a first direction (e.g., upward and downward directions) and may be bonded to each other in the first direction.

For example, the unit cell 700 may be a half cell as shown in FIG. 4 or a mono cell different from the cell shown in FIG. 4. Additionally, the unit cell 700 may be a cell with a configuration different from those of a half cell and a mono cell.

Here, a half cell may be a cell in which a separator 720, an electrode 710 (e.g., a cathode) and a separator 720 are stacked sequentially and bonded to one another as shown in FIG. 4, and a mono cell, contrary to the half cells shown in FIG. 4, may be a cell in which a separator 720, an electrode 710 (e.g., a cathode), a separator 720 and an electrode 710 (e.g., an anode) are stacked sequentially and bonded one another.

Meanwhile, the electrode assembly (not shown) may be manufactured, for example, by the following method.

A mono cell laminate is manufactured by stacking a plurality of mono cells in the first direction, and, the manufacturing of a laminate (not shown) is then completed by stacking one more half cell on the mono cell laminate (not shown) in the first direction (e.g., on top). Thereafter, the electrode assembly may be manufactured by wrapping and securing the completed laminate with tape.

As described above, the laminate is completed by stacking one more half cell on the mono cell laminate at one end thereof in the first direction such that the electrode 710 of the mono cell of the mono cell laminate at the one end thereof in the first direction is prevented from coming in contact with a battery case (not shown) that accommodates the electrode assembly.

In addition, since only one half cell is necessary to manufacture one electrode assembly, a plurality of half cells manufactured in advance may be in long-term storage. That is, when the unit cells 700 of FIGS. 1 to 3 are half cells as shown in FIG. 4, the unit cells 700 may be stored for a long time in a stacked state as shown in FIGS. 1 to 3. Accordingly, due to the static electricity generated during the long-term storage, two or more half cells may be extracted and transported simultaneously from the magazine 100, which will be described later.

The electrode 710 of the unit cell 700 may include a body 712 and an electrode tab 714 (FIG. 4).

The body 712 may be bonded to the separator 720 in the first direction.

The electrode tab 714 may protrude further outward than the body 712 and the separator 720 bonded to the body 712. For example, the electrode tab 714 may protrude further than the body 712 and the separator 720 bonded to the body 712 in one direction (e.g., front direction) of a second direction (e.g., front and rear directions) that intersects the first direction (FIG. 4).

Specifically, for example, the electrode tab 714 may be coupled to the body 712 and protrude from one end (e.g., front end) of the body 712 in one direction (e.g., front direction) of the second direction (FIG. 4).

### [Apparatus of Manufacturing Electrode Assembly]

Referring to FIG. 1, an apparatus of manufacturing electrode assembly 1 according to an embodiment may include a unit cell supply unit 10 and a unit cell transport unit 50. The unit cell transport unit 50 will be described first, and the unit cell supply unit 10 will be described thereafter.

### [Unit Cell Transport Unit]

The unit cell transport unit 50, for example, may extract from the magazine 100 and transport a unit cell 700 at one end (e.g. upper end) of the unit cells 700 stacked in the magazine 100 of the unit cell supply unit 10 in one direction of the first direction (e.g., upward and downward directions).

The unit cell transport unit 50 may include a suction unit 52 and a transport frame 54.

The suction unit 52 may move in vertical direction. The suction unit 52 may adhere to and lift the unit cells 700 at one end of the unit cells 700 stacked in the first direction. That is, the suction unit 52 may extract the unit cell 700 from the magazine 100.

Transport frame 54 may be coupled to the suction unit 52. The transport frame 54 may move in horizontal direction. Accordingly, the unit cell 700 adhered to the suction unit 52 may leave the magazine 100 and be transported to a predetermined location. Here, the predetermined location may be, for example, one end of a new laminate (not shown) having one or more unit cells 700 stacked in the first direction to manufacture a new electrode assembly.

### [Unit Cell Supply Unit according to an Embodiment of the Present Invention]

Referring further to FIGS. 2 and 3, the unit cell supply unit 10 according to an embodiment of the present invention may include a magazine 100 and an anti-static unit 200. The configuration of each of the magazine 100 and the anti-static unit 200 will be deacribed hereinafter.

### [Magazine]

One or more unit cells 700 may be stacked in the magazine 100 in the first direction. For example, eight unit cells 700 are stacked in the magazine 100 in FIGS. 1 and 2.

Specifically, for example, the magazine 100 may include a base 110 and a guide frame 120. Additionally, the magazine 100 may further include an elevating plate 130 and an elevator column 140. The elevating plate 130 and elevator column 140 may be optional.

The base 110 may constitute a basis of the magazine 100. The guide frame 120, thee elevating plate 130 and the elevator column 140 may be installed on the base 110.

The guide frame 120 may be installed on the base 110 and may extend in the first direction. The guide frame 120 may at least partially surround the outer periphery of the unit cells 700 stacked on the base 110. The guide frame 120 may be in contact with the outer periphery of the unit cell 700.

For example, a plurality of guide frames 120 (four guide frames are shown in the drawing) may be provided corresponding to the number of corners of the unit cell 700. The guide frames 120 may be disposed at locations corresponding to the corners of the unit cells 700, respectively, and may be disposed spaced apart from one another. The cross-section of the guide frame 120 may correspond to the shape of the edge (e.g., 'L' shape) of the unit cell 700 corresponding to each guide frame 120.

The guide frame 120 may guide the unit cell 700 when inserting the unit cell 700 into the magazine 100. Accordingly, the unit cells 700 may be stacked on the base 110 or the elevating plate 130 while being aligned and may remain aligned.

Additionally, the guide frame 120 may at least partially surround the elevating plate 130. The guide frame 120 may guide the lifting and lowering of the elevating plate 130.

The elevating plate 130 may be disposed on the base 110 and may be lifted and lowered. One or more unit cells 700 may be stacked on the elevating plate 130 in the first direction.

The elevator column 140 may be coupled to the lower end of the elevating plate 130 and may be lifted and lowered. The elevator column 140 may elevate the elevating plate 130.

The elevating plate 130 and the elevator column 140 may adjusted in a manner that the position (e.g., height) of the unit cell 700 disposed at one end (e.g., upper end) of the one or more unit cells 700 stacked in the first direction is constant.

### [Anti-static Unit]

The anti-static unit 200 may be disposed adjacent to the magazine 100. The anti-static unit 200 may remove static electricity from the unit cells 700 stacked in the magazine 100.

The anti-static unit 200 may include a contact body 210 (FIGS. 1 to 3).

The contact body 210 may be made of a conductive material. For example, the contact body 210 may be made of copper.

The contact body 210 may be in contact with at least one of the one or more unit cells 700 stacked in the magazine 100. Here, the contact body 210 may be in contact with at least one of the one or more electrodes 710 of each of the at least one of the one or more unit cells 700 to discharge static electricity from the at least one of the one or more unit cells 700.

For example, the contact body 210 may be in contact with eight unit cells 700 stacked in the magazine 100 as shown in FIGS. 1 to 3. Here, when each of the eight unit cells 700 of FIGS. 1 to 3 is the above-described half cell including one electrode 710 as shown in FIG. 4, the contact body 210 may be in contact with the electrode 710 of each of the eight unit cells (half cells) 700 to discharge static electricity from the one or more unit cells 700. When the unit cell 700 of FIGS. 1 to 3 is the above-described mono cell including two electrodes 710, contrary to the half cells shown in FIG. 4, the contact body 210 may be in contact with one electrode 710 or two electrodes 710 of each of the eight unit cells (mono cells) 700 to discharge static electricity from the one or more unit cells 700.

Accordingly, the contact body 210, which is a conductor, is in contact with and electrically connected to the at least one of one or more electrode 710 (conductor) of each of the at least one of the one or more unit cells 700 so as to discharge the static electricity of the unit cell 700 effectively.

Specifically, since the contact body 210, which is a conductor, is in contact with and electrically connected to the electrode 710, which is a conductor, the static electricity of the electrode 710 of the unit cell 700 may be effectively discharged. In addition, even when the separator 720 of the unit cell 700 is made of an insulating material, unlike the electrode 710, the static electricity of the separator 720 may be effectively discharged through the electrode 710 bonded to the separator 720. Thus, even when the contact body 210 is in contact with the electrode 710 of the unit cell 700, the static electricity of the entirety of the one or more unit cells 700 may be effectively discharged.

Therefore, since the static electricity of the unit cell 700 is effectively reduced, it is possible to prevent two or more unit cells 700 stacked in the magazine 100 from being extracted simultaneously. That is, individual extraction and supply of the one or more unit cells 700 stacked in the magazine 100 is possible. Accordingly, manufacturing defects of the electrode assembly due to the simultaneous extraction and the transport of two or more unit cells 700 may be prevented, and the interruption of the manufacturing process of the electrode assembly caused by one or more unit cells 700 falling during the transport to block sensors such as cameras may be prevented.

In particular, in case the unit cell 700 is a half cell in which a separator 720, an electrode 710, and a separator 720 are stacked, a plurality of half cells stacked in the magazine 100 may be individually extracted and transported from the magazine 100 even after a long-term storage due to the effective discharge of the static electricity of the half cell. Therefore, manufacturing defects of the electrode assembly due to stacking of two or more half cells on the laminate having a plurality of stacked mono cells in each of which separator 720, electrode 710, separator 720, and electrode 710 are stacked caused by the simultaneous extraction and the transport of two or more half cells may be prevented. **In** addition, the interruption of the manufacturing process of the electrode assembly caused by the simultaneous extraction and the transport of two or more half cells due to the generation of static electricity due to long-term storage and one or more half cells falling during the transport to block sensors such as cameras may be prevented.

The contact body 210 may be in contact with the at least one of one or more electrodes 710 of the unit cell 700 disposed at one end (e.g. upper end) of the unit cells 700 stacked in the magazine 100 in the first direction. Here, the unit cell transport unit 50 may extract from the magazine 100 and transport the unit cell 700 disposed at one end of the unit cells 700 stacked in the magazine 100 in the first direction as described above.

Accordingly, in case of the unit cell transport unit 50 extracting from the magazine 100 and transporting the unit cell 700 disposed at one end (e.g. upper end) of the unit cells 700 stacked in the first direction, the simultaneous extraction and the transport of two or more unit cells 700 disposed at one end of the unit cells 700 stacked in the first direction may be prevented since at least the static electricity of the unit cell 700 disposed at one end of the unit cells 700 stacked in the first direction is discharged by contact body 210. As a result, the unit cells 700 stacked in the magazine 100 may be reliably and individually extracted and supplied.

The contact body 210 is in contact with the at least one of the one or more unit cells 700 by being in contact with the electrode tab 714 of each of the at least one of the one or more electrodes 710 of each of the at least one of the one or more unit cells 700 to discharge static electricity.

For example, when each of the eight unit cells 700 of FIGS. 1 to 3 is the above-described half cell including one electrode 710 as shown in FIG. 4, the contact body 210 may be in contact with the electrode 710 of each of the eight unit cells 700 stacked in the magazine 100 to discharge static electricity from the one or more unit cells 700. When the unit cell 700 of FIGS. 1 to 3 is the above-described mono cell including two electrodes 710, contrary to the half cells shown in FIG. 4, the contact body 210 may be in contact with one electrode 710 or two electrodes 710 of each of the eight unit cells (mono cells) 700 to discharge static electricity from the one or more unit cells 700.

Accordingly, by being in contact with the electrode tab 714 protruding outward, the contact body 210, which is a conductor, may be electrically connected to the electrode 710 simply and easily. As a result, manufacturing and maintenance costs of the contact body 210 and the apparatus of manufacturing electrode assembly may be reduced as the structure of the contact body 210 may be simplified.

The contact body 210 may be in contact with the plurality of unit cells 700 by being in contact with an electrode tab 714 of each of the at least one of the one or more electrodes 710 of the each of the plurality of unit cells 700

Here, the electrode tab 714 of each of the at least one of the one or more electrodes 710 of each of the plurality of unit cells 700 may protrude further than the body 712 coupled to the electrode tab 714 and the separator 720 bonded to the body 712 in one direction (e.g., front direction) of the second direction (e.g., front and rear directions).

The contact body 210 may extend in the first direction to be in contact with the electrode tab 714 of each of the plurality of unit cells 700, which protrudes further than in one direction of the second direction (FIGS. 1 to 3).

Accordingly, the static electricity of the plurality of unit cells 700 stacked in the magazine 100 may be effectively discharged by the contact body 210 extending in the first direction. Thus, the manufacturing and maintenance costs of the contact body 210 and the apparatus of manufacturing electrode assembly may be reduced since the configuration of the electrode assembly may be simplified.

In case of the electrode tab 714 of each of the at least one of the one or more electrodes 710 of each of the at least one of the one or more unit cells 700 protruding further than the body 712 coupled to the electrode tab 714 and the separator 720 bonded to the body 712 in the second direction as described above, the contact body 210 may be disposed at one side of the electrode tab 714 of each of the at least one of the one or more electrodes 710 of each of the at least one of the one or more unit cells 700 in the second direction. In addition, the contact body 210 may be in contact with the electrode tab 714 of each of the at least one of the one or more electrodes 710 of each of the at least one of the one or more unit cells 700 in the second direction (FIG. 1 to FIG. 3).

Accordingly, since the contact body 210 is in contact with the protruding end (one side end in the second direction) of the electrode tab 714, that is, with the free end of the electrode tab 714, the electrode tab 714 may not be significantly damaged or deformed due to the contact body 210 applying pressure to the electrode tab 714 in the second direction.

In addition, the contact body 210 may be easily brought into contact with the electrode tab 714 or separated from the electrode tab 714 as necessary while moving the contact body 210 relatively from the unit cell 700 and the magazine 100 in the second direction. Accordingly, the operation of the unit cell supply unit 10 of the apparatus of manufacturing electrode assembly 1 may be simplified and facilitated.

Meanwhile, when projected perpendicularly to an arbitrary plane extending in the second direction and the third direction (left and right direction) intersecting the first direction and the second direction, the body 712 of each of the at least one of the one or more electrodes 710 of each of the at least one of the one or more unit cells 700 may include an overlapping portion P overlapping with the electrode tab 714 coupled to the body 712 in the third direction (FIG. 3).

Here, the distance D (FIG. 3) in the second direction between the overlapping portion P of each of the at least one of the one or more electrodes 710 of each of the at least one of the one or more unit cells 700 and the contact body 210 may be shorter than a length L (FIG. 4) in the second direction of the electrode tab 714 of each of the at least one of the one or more electrodes 710 of each of the at least one of the one or more unit cells 700.

Accordingly, the distance D between the contact body 210 and the body 712 with the electrode tab 714 therebetween may be shortened such that the contact body 210 may reliably be in contact with the electrode tab 714. Accordingly, since the static electricity may be reliably discharged from the unit cells 700 through the contact body 210, the unit cells 700 stacked in the magazine 100 may be reliably extracted and supplied individually.

The value obtained by subtracting the distance D from the length L may be greater than zero and equal to or less than 1/15 of the length L. For example, when the length L of the electrode tab 714 of the electrode 710 in the second direction is 15 mm (millimeters), the distance D in the second direction between the overlapping portion P and the contact body 210 may be less than 15 mm (millimeters) and equal to or greater than 14 mm (millimeters).

Accordingly, the electrode tab 714 may be prevented from having excessive pressure applied thereto by the contact body 210. Thus, the electrode tab 714 may not be damaged or deformed while the contact body 210 is reliably brought into contact with the electrode tab 714.

The contact body 210 and the electrode tab 714 may be made of the same material. For example, when the electrode tab 714 is made of copper, the contact body 210 may also be made of copper.

Accordingly, even when the contact body 210 comes in contact with the electrode tab 714, foreign matter may not stick to the electrode tab 714.

The contact body 210 may be grounded (FIGS. 1 to 3).

Accordingly, the unit cells 700 stacked in the magazine 100 may be reliably and individually extracted and supplied as the static electricity of the unit cell 700 may be reliably discharged through the grounded contact body 210.

### [Unit Cell Supply Unit according to Another Embodiment of the Present Invention]

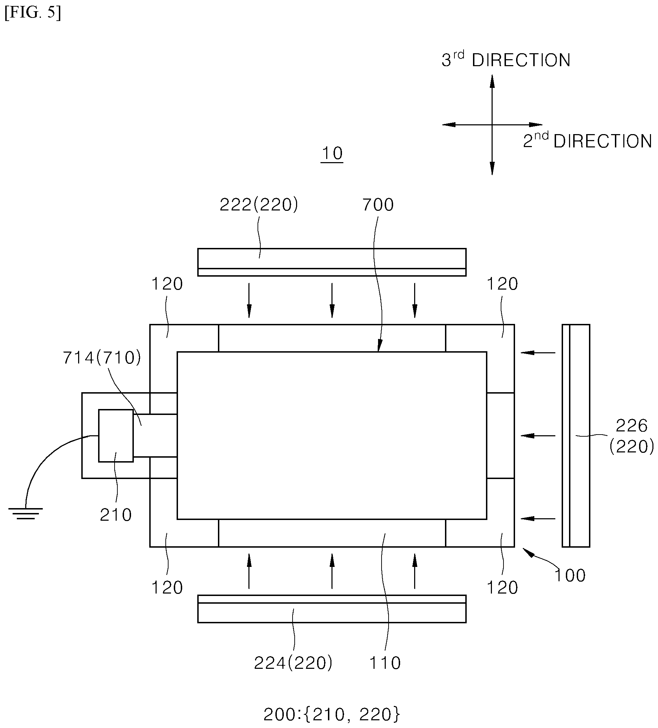

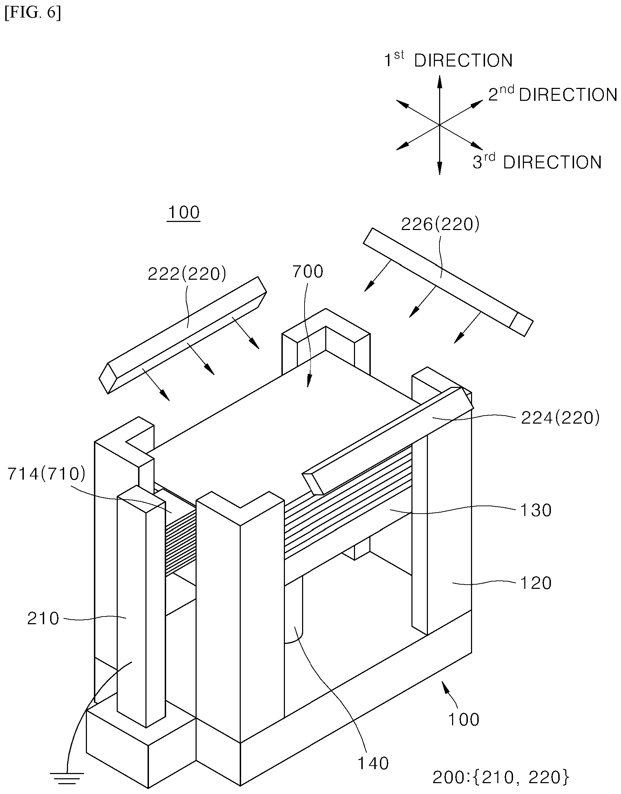

Referring further to FIGS. 5 and 6, the unit cell supply unit 10 according to another embodiment of the present invention may include a magazine 100 and an anti-static unit 200 as shown in FIGS. 1 to 3. Hereinafter, the description will be focused on the differences from those shown in FIGS. 1 to 3.

The anti-static unit 200 may further include a blower type ionizer 220.

The blower type ionizer 220 generates ions and blows ionized air containing the generated ions toward the unit cell 700 stacked in the magazine 100 to remove static electricity from the unit cell 700.

Accordingly, the static electricity of the unit cell 700 may be reliably removed through the contact body 210 and the blower type ionizer 220 such that the unit cells 700 stacked in the magazine 100 may be reliably and individually extracted and supplied.

The blower type ionizer 220 may blow ionized air toward at least one unit cell 700 disposed at one end of the one or more unit cells 700 stacked in the magazine 100 in the first direction. At this time, the unit cell transport unit 50 may extract from the magazine 100 and transport the unit cell 700 disposed at one end of the one or more unit cells 700 stacked in the magazine 100 in the first direction as described above.

Accordingly, when the unit cell transport unit 50 extracts from the magazine 100 and transports the unit cell 700 disposed at one end (e.g., upper end) of the one or more unit cells 700 stacked in the first direction, the static electricity of at least one unit cell 700 disposed at one end of the one or more unit cells 700 stacked in the first direction is removed by the blower type ionizer 220 such that the unit cell transport unit 50 may be prevented from extracting and transporting two or more unit cells 700 disposed at one end of the one or more unit cells 700. Therefore, the unit cells 700 stacked in the magazine 100 may be reliably and individually extracted and supplied.

Meanwhile, as described above, the electrode 710 of the unit cell 700 may include: a body 712 bonded to the separator 720 in the first direction; and the electrode tab 714 coupled to the body 712 and protruding from one end (e.g., front end) of the body 712 in one direction (e.g., front direction) of the second direction further outward than the separator 720 bonded to the body 712.

Here, the contact body 210 may be disposed at one side in the second direction (e.g., front side) of the electrode tab 714 of each of the one or more electrodes 710 of each of the at least one of the one or more unit cells 700 stacked in the magazine 100.

**In** addition, the contact body 210 may be in contact with the electrode tab 714 of each of the one or more electrodes 710 of each of the at least one of the one or more unit cells 700 stacked in the magazine 100. Here, "the at least one of the one or more unit cells 700 stacked in the magazine 100" may refer to the entirety of unit cells 700 stacked in the magazine 100, and "the one or more electrodes 710 of each of the at least one of the one or more unit cells 700 stacked in the magazine 100" may refer to the entirety of electrodes 710 of the entirety of the unit cells 700.

**In** addition, the blower type ionizer 220 may include the first blower type ionizer 222, the second blower type ionizer 224 and the third blower type ionizer 226.

The first blower type ionizer 222 may be disposed at one side (e.g., left side) of the one or more unit cells 700 in the above-described third direction (e.g., left and right directions) and blow the ionized air toward the one or more unit cells 700.

The second blower type ionizer 224 may be disposed at the other side (e.g., right side) of the one or more unit cells 700 in the third direction and blow ionized air toward the unit cell 700.

The third blower type ionizer 226 may be disposed at the other side (e.g., rear side) of the one or more unit cells 700 in the second direction and blow ionized air toward the unit cell 700.

Accordingly, the first, the second and the third blower type ionizers 222, 224 and 226 partially surround the one or more unit cells 700 and blow a large amount of ionized air from various directions toward the unit cell 700, thereby removing the static electricity of the one or more unit cells 700 effectively and reliably.

**In** addition, since the blower type ionizer 220 is not disposed at one side of the unit cells 700 in the second direction, the damage or the deformation of the electrode tab 714 protruding from one end of the unit cell 700 in the second direction toward one direction of the second direction due to the blowing pressure of the ionized air may be prevented.

**In** addition, every electrode tab 714 of every unit cell 700 may protrude in one direction of the second direction, and the contact body 210 in contact with every electrode tabs 714 of every unit cell 700 may be disposed at one side of the unit cells 700 in the second direction. Thus, the static electricity of every unit cell 700 may be effectively discharged by the contact body 210 having a simple shape (e.g., a bar shape extending in the first direction) and configuration (e.g., only one). Accordingly, manufacturing and maintenance costs of the contact body 210 and the apparatus of manufacturing electrode assembly may be reduced.

In addition, since every electrode tab 714 of every unit cell 700 may protrude in one direction of the second direction, it is sufficient that the blower type ionizer 220 is not disposed at one side of the unit cells 700 in the second direction to prevent damage or deformation of the electrode tabs 714. That is, the first, the second and the third blower type ionizers 222, 224 and 226 may be disposed at the other side of the unit cells 700 in the second direction and one and the other sides of the unit cells 700 in the third direction except one side of the unit cells 700 in the second direction. Therefore, the number of directions in which ionized air may be blown toward the unit cell 700 may increase and the amount of blown ionized air may increase. Thus, static electricity of the unit cell 700 may be effectively and reliably removed.

### [Manufacturing Method of Electrode Assembly]

According to an embodiment of the present invention, a method of manufacturing an electrode assembly using the above-described apparatus of manufacturing electrode assembly may include a unit cell supply step.

In the unit cell supply step, the contact body 210 may be brought into contact with the electrode tab 714 of each of the at least one of the one or more electrodes 710 of each of the one or more unit cells 700.

Accordingly, since the contact body 210, which is a conductor, is electrically connected to the at least one of the one or more electrodes 710 (conductor) of each of the one or more unit cells 700 by being in contact with the one or more electrodes 710, the static electricity of the unit cell 700 may be effectively discharged. Therefore, it is possible to prevent two or more unit cells 700 stacked in the magazine 100 from being extracted and supplied simultaneously as the static electricity of the unit cell 700 is effectively reduced. That is, individual extraction and supply of the one or more unit cells 700 stacked in the magazine 100 is possible. Accordingly, manufacturing defects of the electrode assembly due to the extraction and the transport of two or more unit cells 700 may be prevented, and the interruption of the manufacturing process of the electrode assembly caused by one or more unit cells 700 falling during the transport to block sensors such as cameras may be prevented.

In addition, the contact body 210 may be brought into contact with one or more electrodes 710 of at least one unit cell 700 disposed at one end (e.g., upper end) of one or more unit cells 700 stacked in the magazine 100 in the first direction.

In addition, the contact body 210 may be brought into contact with the one or more unit cells 700 stacked in the magazine 100 by bringing the contact body 210 into contact with the electrode tab 714 of each of the at least one of the one or more electrodes 710 of each of the one or more unit cells 700.

Additionally, the contact body 210 may be brought into contact with the electrode tab 714 of each of the at least one of the one or more electrodes 710 of each of the one or more unit cells 700 in the second direction.

Here, the contact body 210 may be brought into contact with each of the at least one of the one or more electrodes 710 in the second direction such that the distance D (FIG. 3) in the second direction between the overlapping portion P of each of the at least one of the one or more electrodes 710 of each of the one or more unit cells 700 and the contact body 210 may be shorter than a length L (FIG. 4) in the second direction of the electrode tab 714 of each of the at least one of the one or more electrodes 710 of each of the one or more unit cells 700.

Additionally, the contact body 210 may be grounded.

Additionally, by operating the blower type ionizer 220, ions may be generated and ionized air containing the generated ions may be blown toward the unit cell 700 stacked in the magazine 100.

The above-described embodiments should be understood in all respects as illustrative and not restrictive, and the scope of the present invention will be represented by the claims to be described later rather than the detailed description given above. In addition, all changes and modifications derived from the equivalent concept as well as the meaning and scope of the patent claims to be described later should be construed as being included in the scope of the present invention.

As described above, the present invention has been described with reference to the illustrative drawings, but the present invention is not limited to the embodiments and drawings disclosed herein, and various modifications may be made by those skilled in the art within the scope of the technical idea of the present invention. It is obvious that transformation may occur. In addition, although the operational effects according to the configuration of the present invention were not explicitly described and explained while explaining the embodiments of the present invention above, it is natural that the predictable effects due to the configuration should also be recognized.

### [DESCRIPTION OF REFERENCE NUMERALS]

| | | | |
|---|---|---|---|
| 1: | apparatus of manufacturing electrode assembly | | |
| 10: | unit cell supply unit | | |
| 100: | magazine | | |
| 110: | base | 120: | guide frame |
| 130: | elevating plate | 140: | elevator column |
| 200: | anti-static unit | | |
| 210: | laminate | 220: | blower type ionizer |
| 222: | first blower type ionizer | 224: | second blower type ionizer |
| 226: | third blower type ionizer | | |
| 50: | unit cell transport unit | | |
| 52: | suction unit | 54: | transport frame |
| 700: | unit cell | 710: | electrode |
| 712: | body | 714: | electrode tab |
| 720: | separator | | |

## Claims

1. An apparatus of manufacturing an electrode assembly, comprising:
a unit cell supply unit 10 comprising: a magazine 100 having therein one or more unit cells 700 stacked in a first direction; and an anti-static unit 200 arranged adjacent to the magazine 100 and removing static electricity from at least one of the one or more unit cells 700 stacked in the magazine 100; and
a unit cell transport unit 50 extracting from the magazine 100 and transporting the one or more unit cells 700 stacked in the magazine 100,
wherein each of the one or more unit cells 700 comprises one or more electrodes 710 and one or more separators 720 alternately stacked and bonded to each other in the first direction,
the anti-static unit 200 comprises a contact body 210 made of a conductive material, the contact body 210 being in contact with the at least one of the one or more unit cells 700 to discharge static electricity from the at least one of the one or more unit cells 700 by being in contact with an electrode tab 714 of each of at least one of the one or more electrodes 710 of each of the at least one of the one or more unit cells 700,
the electrode tab 714 of each of the at least one of the one or more electrodes 710 of each of the at least one of the one or more unit cells 700 protrudes in one direction of a second direction intersecting the first direction, and
the contact body 210 is disposed at one side of the electrode tab 714 in the second direction.

2. The apparatus of manufacturing electrode assembly of claim 1, wherein the at least one of the one or more unit cells 700 comprises one unit cell 700 disposed at one end of the one or more unit cells 700 stacked in the magazine 100 in the first direction, and the unit cell transport unit 50 extracts from the magazine 100 and transports the one unit cell 700 of the one or more unit cells 700 stacked in the magazine 100 in the first direction.

3. The apparatus of manufacturing electrode assembly of claim 1, wherein each of the at least one of the one or more electrodes 710 of each of the at least one of the one or more unit cells 700 comprises: a body 712 bonded to the one or more separators 720 in the first direction; and the electrode tab 714 coupled to the body 712 and protruding further than the body 712 and the one or more separators 720 bonded to the body 712 in one direction of the second direction.

4. The apparatus of manufacturing electrode assembly of claim 3, wherein the at least one of the one or more unit cells 700 is a plurality of unit cells 700, and
the contact body 210 extends in the first direction to be in contact with the electrode tab 714 of each of the plurality of unit cells 700, the electrode tab 714 protruding further than the body 712 and the one or more separators 720 in the one direction of the second direction

5. The apparatus of manufacturing electrode assembly of claim 3, wherein the contact body 210 is in contact with the electrode tab 714 of each of the at least one of the one or more electrodes 710 of each of the at least one of the one or more unit cells 700 in the second direction.

6. The apparatus of manufacturing electrode assembly of claim 5, wherein, when projected perpendicularly to an arbitrary plane extending in the second direction and a third direction intersecting the first direction and the second direction, the body 712 of each of the at least one of the one or more electrodes 710 of each of the at least one of the one or more unit cells 700 comprises an overlapping portion P overlapping with the electrode tab 714 coupled to the body 712 in the third direction, and
a distance D in the second direction between the overlapping portion P of each of the at least one of the one or more electrodes 710 of each of the at least one of the one or more unit cells 700 and the contact body 210 is shorter than a length L in the second direction of the electrode tab 714 of each of the at least one of the one or more electrodes 710 of each of the at least one of the one or more unit cells 700.

7. The apparatus of manufacturing electrode assembly of claim 6, wherein a value obtained by subtracting the distance D from the length L is greater than zero and equal to or less than 1/15 of the length L.

8. The apparatus of manufacturing electrode assembly of claim 1, wherein the contact body 210 and the electrode tab 714 are made of the same material.

9. The apparatus of manufacturing electrode assembly of claim 1, wherein the contact body 210 is grounded.

10. The apparatus of manufacturing electrode assembly of claim 1, wherein the anti-static unit 200 further comprises a blower type ionizer 220 for removing the static electricity from the at least one of the one or more unit cells 700 by generating ions and blowing ionized air containing generated ions toward the one or more unit cells 700 stacked in the magazine 100.

11. The apparatus of manufacturing electrode assembly of claim 10, wherein the unit cell transport unit 50 extracts from the magazine 100 and transports one unit cell 700 disposed at one end of the one or more unit cells 700 stacked in the magazine 100 in the first direction, and
the blower type ionizer 220 blows the ionized air toward at least the one unit cell 700 disposed at one end of the one or more unit cells 700 stacked in the magazine 100 in the first direction.

12. The apparatus of manufacturing electrode assembly of claim 10, wherein the blower type ionizer 220 comprises: a first blower type ionizer 222 disposed at one side of the one or more unit cells 700 in a third direction intersecting the first and the second directions and blowing the ionized air toward the one or more unit cells 700; a second blower type ionizer 224 disposed at the other side of the one or more unit cells 700 in the third direction and blowing the ionized air toward the one or more unit cells 700; and a third blower type ionizer 226 disposed at the other side of the one or more unit cells 700 in the second direction and blowing the ionized air toward the one or more unit cells 700.

13. A method of manufacturing an electrode assembly using an apparatus of manufacturing electrode assembly of one of claims 1 to 12, the method comprising:
a unit cell supply step of individually extracting and supplying the one or more unit cells 700 stacked in the magazine 100,
wherein the contact body 210 is brought into contact with the electrode tab 714 of each of at least one of the one or more electrodes 710 of each of the at least one of the one or more unit cells 700 in the unit cell supply step.
